Europäisches Patentamt

(19) **European Patent Office**

**Office européen des brevets**

(11) Publication number: **0 265 393**
**B1**

(12) **EUROPEAN PATENT SPECIFICATION**

(45) Date of publication of the patent specification: **18.10.89**

(21) Application number: **87830342.9**

(22) Date of filing: **29.09.87**

(51) Int. Cl.⁴: **B62D 33/02**

(54) Device for locking folding side boards of industrial vehicle bodies.

(30) Priority: **01.10.86 IT 5390086 U**

(43) Date of publication of application:
**27.04.88 Bulletin 88/17**

(45) Publication of the grant of the patent:
**18.10.89 Bulletin 89/42**

(84) Designated Contracting States:
**AT BE DE FR GB IT LU NL SE**

(56) References cited:
**DE-B- 1 111 959**

(73) Proprietor: **OFFICINE VIBERTI S.p.A., Viale Matteotti 99, I-10042 Nichelino Torino(IT)**

(72) Inventor: **Nobili, Roberto, c/o OFFICINE VIBERTI S.p.A. Viale Matteotti 99, I-10042 Nichelino Torino(IT)**

(74) Representative: **Saconney, Piero et al, c/o JACOBACCI-CASETTA & PERANI S.p.A. Via Alfieri, 17, I-10121 Torino(IT)**

ACTORUM AG

## Description

The present invention relates to a device for locking two adjacent folding side boards of an industrial vehicle body in the upright position, the lower edges of which side boards are hinged in a detachable manner to a side member of the floor of the body, of the type comprising a folding stanchion placed between the two side boards and whose lower end is hinged in a detachable manner to the side member, and in which the stanchion is provided with a lower wedge-shaped bolt which can be inserted downwardly in a corresponding lower ferrule fixed to the side member so as to hold the stanchion member in the upright position, which stanchion comprises lateral stops, against which the lateral edges of the side boards are engaged in the upright position, and is provided on its upper part with a locking plate which has a profiled contour with two opposite lobes and is rotatably disposed against the external face of the stanchion so that it can be manually brought into an intermediate angular position, in which the two lobes project from the two sides of the stanchion so that the lateral edges of the side boards are locked between the lobes and the stops, and into two positions which are angularly symmetrical with respect to the intermediate position and in which either of the two lobes projects from the respective side of the stanchion so as to lock the lateral edge of the corresponding side board and leave the lateral edge of the opposite side board free.

A device of this kind has already been devised and used to remedy the disadvantage of the more conventional devices in which the stanchion is provided with bolts movable along its edges which engage downwardly in corresponding ferrules of the side boards. The disadvantage of these more conventional devices lies in the rigid connection between the stanchion and the side boards, as a result of which there is no clearance between these components for their "fan-like" angular movements, due to the elastic deformations of the vehicle structure during travel, with the possibility of fatigue failure.

In a device known through DE-A-1 111 959 and representing the prior art which is closest to the invention a single locking plate with lobes is disposed very high up on the stanchion. This plate actually permits the "fan-like" movements of the stanchion and of the adjacent side boards, since the edges of the side boards can slide in their plane with respect to the stops of the stanchion and the lobes of the plate.

However the arrangement of the plate in this high position entails other drawbacks:
- because it is so high up, it has to be moved by a person standing on a step-ladder or similar in order to unlock the side boards;
- as the lower parts of the side boards are not fixed to the stanchion, they are liable to bend outwards under the force of the load.

It is however impossible to arrange the locking plate lower down the stanchion, since in this case the upper parts of the side boards would not be fixed and would inevitably sway during movement of the vehicle, entailing at the very least the disadvantage of annoying rattles and, even worse, would be subject to deformations under the force of the load.

The object of the present invention is to remedy the disadvantages of the known solution comprising a single locking plate, while retaining the advantages of the above-mentioned more conventional devices.

This object is solved according to the invention by a device of the kind mentioned in the preamble, characterized in that the stanchion is also provided on its lower part with a second locking plate which is essentially identical to that of the upper part, in that the two locking plates are keyed and kinematically connected so as to pivot while maintaining the same relative orientation, and in that the lower plate is permanently provided with a manually operated handle for the purpose of rotating both the lower and the upper plate.

This solution has the advantage of enabling the side boards and the stanchions to move in a "fan-like" manner with the elastic deformations of the vehicle structure, although they are more efficiently secured together in the upright position, which prevents them from bending and rattling.

The operating handle device on the lower locking plate makes this handle easily accessible to a person standing on the ground beside the vehicle body.

Preferably, the device according to the invention also comprises a kinematic mechanism for converting the rotation of the operating handle into a linear movement of the bolt so as to release the latter from the ferrule by rotating the handle into an angular position of 180° with respect to the position corresponding to the above-mentioned intermediate position of the locking plates.

This solution remedies a further disadvantage of the known stanchion comprising a single locking plate and of other conventional stanchions in which the bolt is simply formed by a wedge which is rigid with the stanchion and can be removed from the ferrule by striking it with a hammer. According to the solution of the invention the bolt can instead be easily moved by means of the same handle which causes the locking plates to rotate.

A better understanding of the subject matter of the invention will be obtained from the following detailed description, made with reference to the accompanying drawings, given by way of non-limiting example, in which:

Figure 1 is a perspective view of a stanchion of the device according to the invention and the two side boards which flank it, in the upright and locked position,

Figure 2 is a plan view on a larger scale, as indicated by the arrow II in Figure 1,

Figure 3 is a longitudinal section through the stanchion along the line III-III of Figure 1,

Figure 4 is an exploded perspective view of the stanchion,

Figure 5 is a perspective view similar to Figure 1, in which the stanchion and one of the side boards are shown in the upright and locked position, while the other side board is shown in the unlocked and lowered position, and

Figure 6 is a longitudinal section along the line VI-VI of Figure 3, which shows the means for moving the lower bolt.

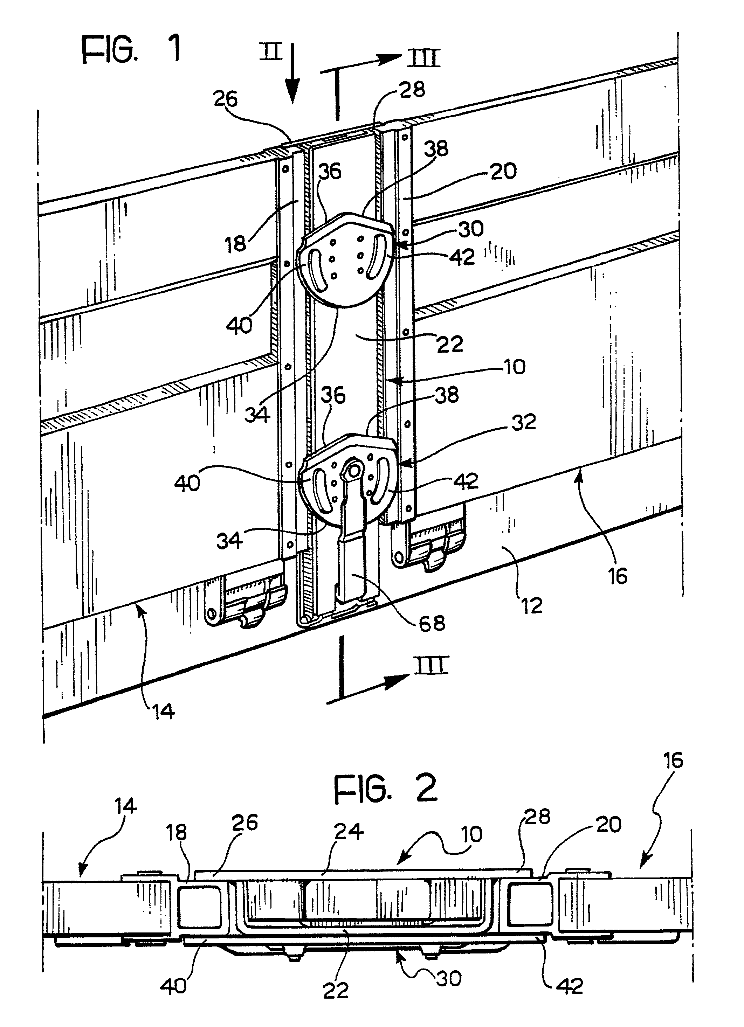

Referring to Figures 1 and 2, a box-shaped stanchion of strong sheet metal is indicated overall by 10. The stanchion 10 is hinged at the bottom in a detachable manner to a side member 12 of a floor of an industrial vehicle, such as a lorry, a trailer or a semi-trailer.

In figure 1 the stanchion 10 is shown in the locked condition and in the upright position against the side member 12.

The lower edges of two adjacent folding side boards 14 and 16, between which the stanchion 10 is positioned, are also hinged in a detachable manner to the side member 12. The reference numerals 18 and 20 designate profiled components which form the edges, adjacent to the stanchion 10, of the side boards 14 and 16.

The box-shaped stanchion 10 is essentially formed by a sheet metal component 22, which is disposed on the outside and has a flattened C section, and by a sheet metal plate 24 which is disposed on the inside and welded to the component 22.

The plate 24 comprises laterally projecting borders 26 and 28 which form stops for the edges 18 and 20 of the side boards 14 and 16 in the upright position.

Two rotatable locking plates 30 and 32, which are disposed on the upper and lower parts, respectively, of the stanchion 10, are applied to the external face formed by the web of the component 22.

The two plates 30 and 32 are substantially identical. Both have an external shape which corresponds essentially to an arc of a circle 34, extending through approximately 180° or slightly more, and has two consecutive sides 36 and 38 forming an obtuse angle. Two symmetrical lobes 40 and 42, which correspond to portions engaged by one of the two sides 36 and 38 and by the arc 34, respectively, are thus formed in each plate 30 and 32.

The two locking plates 30 and 32 are hinged to the centre of the stanchion 10 and dimensioned such that the arc of a circle 34 has a diameter which is greater than the width of the C-shaped component 22 of the stanchion 10.

In Figures 1 and 2 the two locking plates 30 and 32 are disposed in an intermediate angular position in which their two lobes 40 and 42 project from the two sides of the stanchion 10, in front of the stops 26 and 28. As can be seen clearly from Figure 2, when the plates are disposed in this way the lateral edge 18 of the side board 14 is clamped between the lobe 40 of each locking plate and the stop 26, and the lateral edge 20 of the side board 16 is thus also clamped between the lobe 42 and the stop 28. The two side boards 14 and 16 therefore remain locked to the stanchion 10 in the upright position, without the possibility of swaying in the transverse direction with respect to the direction of movement. Instead the side boards 14 and 16 and the stanchion 10 can advantageously move in a "fan-like" manner, since the edges 18 and 20 can slide parallel to the respective stops 26 and 28 and the respective lobes 40 and 42.

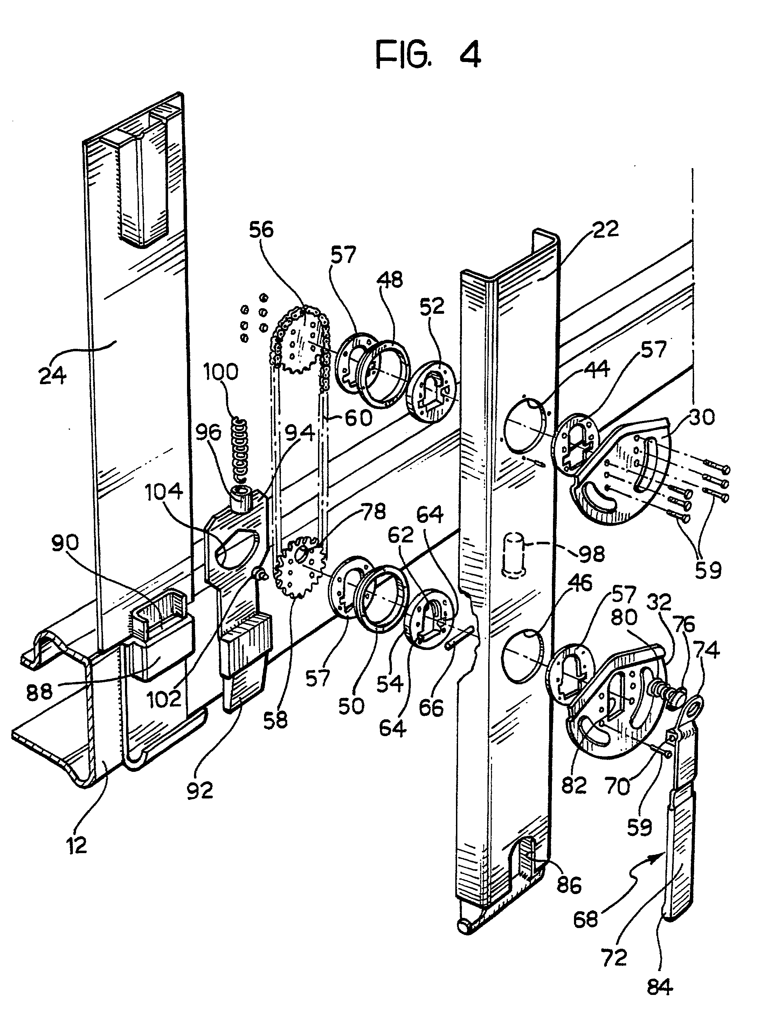

Reference will now be made to Figures 3 and 4, in which the parts which have already been described and which appear in Figures 1 and 2 are designated by the same reference numerals.

Respective round holes 44 and 46 are provided in the web of the C-shaped component 22 at the level of the two locking plates 30 and 32. A respective ring 48, 50, which is made of an antifriction material and acts as a bearing, is fixed to the internal face of the web of the component 22 so as to correspond to the holes 44 and 46. A respective stud 52, 54 in the form of a disc is supported in each bearing 48 and 50. Each of these studs 52 and 54 has a face which is turned towards the outside and which, in the mounted state, is disposed flush with the external face of the component 22. The respective locking plates 30 and 32 are fixed to these external faces of the studs 52 and 54.

Respective chain gears 56 and 58 with an equal number of teeth are fixed to the opposite face of the studs 52 and 54 within the cavity of the stanchion 10. Antifriction washers 57, which rub against the sheet metal wall of the component 22, are disposed between the plates 30 and 32 and the studs 52 and 54 at one side and between the gears 56 and 58 and the studs 52 and 54 on the other side. Connectors 59 keep together each "pack", consisting of a locking plate 30 or 32, its stud 52 or 54, its chain gear 56 or 58 and the respective washers 57.

The chain gears 56 and 58 are interconnected, inside the stanchion 10, by a roller-type driving chain 60. As will become obvious, the gears 56 and 58 also act as thrust bearing shoulders, in that they cooperate at the front with the rings 48 and 50.

As will be understood, the chain gear 56-58-60 forms a kinematic mechanism which interconnects the two locking plates 30 and 32 such that they pivot in unison. The plates 30 and 32 are also mounted so that they pivot while maintaining the same relative orientation.

The disc 54, which acts as a support stud for the lower plate 32 and lower gear 58, has an aperture 62, which is flanked by two aligned cylindrical seats 64. These seats 64 receive a transverse stud 66 forming a fulcrum whose axis is parallel to the plate 32. In the assembled condition the stud 66 remains locked between the disc 54 and the plate 32.

A lever 68 is hinged on the pin 66. The lever 68 is provided towards its end with an eye 70 in which the stud 66 is inserted.

The lever 68, which extends in the direction of the axis of symmetry of the plate 32, comprises a larger arm 68 which forms a handle projecting from the edge of the plate 32 formed as the arc of a circle 34. The arrangement is such that the lever or handle 68 points vertically downwards, as in Figure 1, when the locking plate 32 is in the intermediate position in which it locks the two side boards 14 and 16.

The lever 68 also comprises a smaller arm 74, with which a thrust bearing cap 76 is associated. A thrust bearing seat 78 is provided in the chain gear 58 so as to correspond to the cap 76. A compressed helical spring 80, which extends through an aperture 82 in the plate 32 and through the aperture 62 in the disc 54, is positioned between the cap 76 and the seat 78. The eye 70 in which the lever 68 pivots is also housed in the apertures 62 and 82.

The free end of the part 72 of the lever 68 which can be gripped comprises a projecting part 84 on its side facing the stanchion 10.

An embedded seat 86 is provided in the end of the C-shaped component 22 below the stanchion 10. The spring 80 acts on the lever 68 so as to cause its larger arm or grippable part 72 to bear flatly against the plate 32 and against the web of the component 22. When the lever 68 is vertical, as in Figure 1, the projecting part 84 fits into the seat 86, and the spring 80 holds it therein. This prevents the accidental rotation of the locking plates 30 and 32 out of their intermediate locking position in which they lock the two side boards 14 and 16.

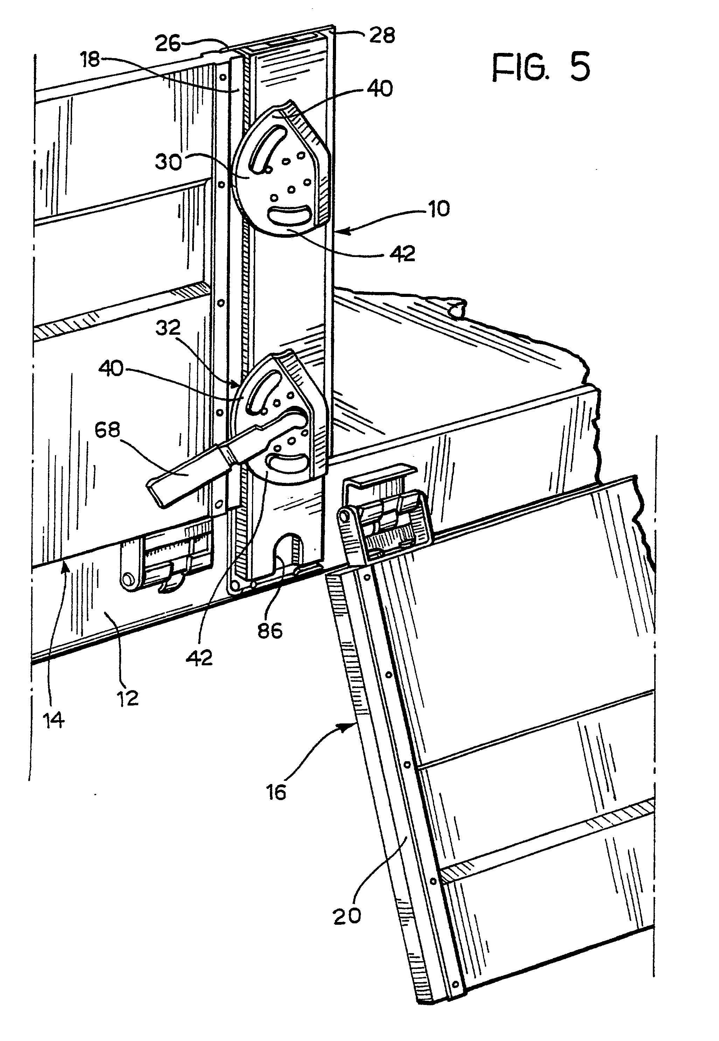

Reference will now be made to Figures 3 and 5 for a description of the operation to unlock one of the two side boards.

In order to carry out the unlocking operation the part 72 of the lever 68 is gripped and pulled against the force of the spring 80 until it is brought into the extracted position indicated by broken lines at 68a in Figure 3. The projecting part 84 is at the same time removed from the seat 86, thus permitting the subsequent joint rotation of the lever 68 and the plates 30 and 32.

In order to unlock the side board 16 the lever 68 is turned in the clockwise direction until the two locking plates 30 and 32 reach the angular position shown in Figure 5. As can be seen, in this position the lobe 40 still projects from the stanchion 10 and, as before, retains the edge 18 of the side board 14. However the lobe 42 no longer projects from the other side of the stanchion 10, enabling the side board 16 to tilt downwards and, if desired, its subsequent release.

In order to unlock the side board 14 and keep the side board 16 locked, the reverse operation is carried out after the lever 68 has been extracted, i.e. the two locking plates 30 and 32 are pivoted into positions which are mirror-images of those shown in Figure 5 with respect to the centre of the stanchion 10. It is obvious that, after unlocking and lowering the side board 14, it is also possible, by carrying out the same reverse rotational movement, to unlock the side board 16, while the stanchion 10 remains upright.

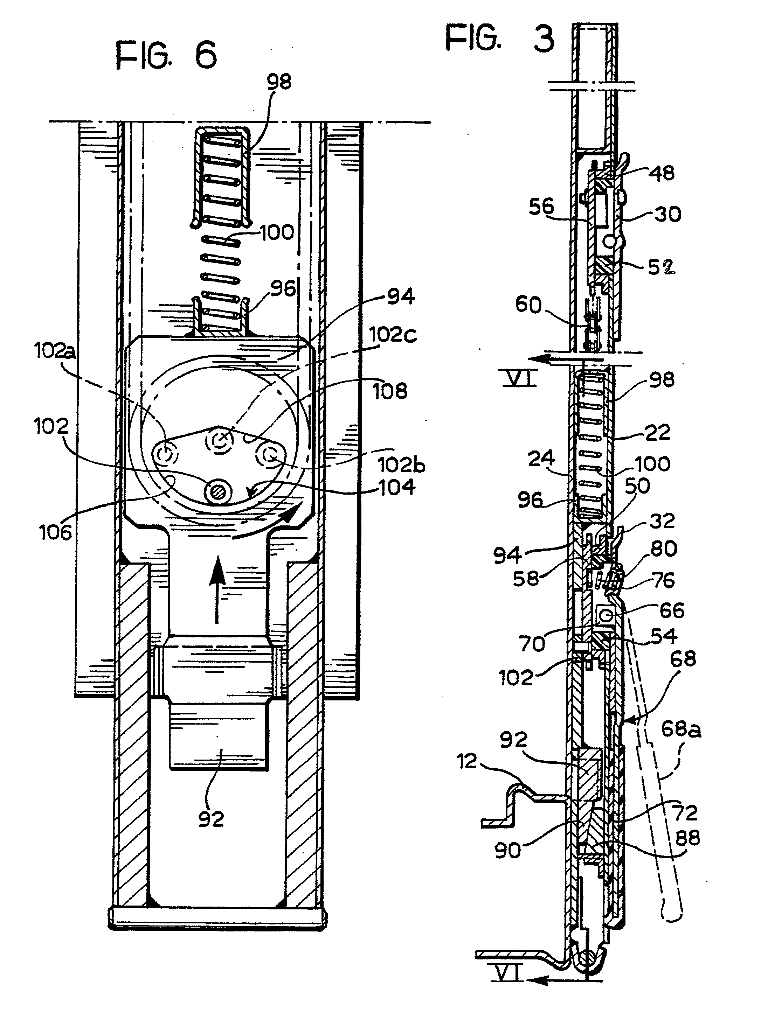

The system for locking and unlocking the stanchion 10 will now be described with reference to Figures 3, 4 and 6.

A ferrule 88, which comprises a wedge seat 90 which is open and diverges upwardly, is fixed to the side member 12 at the point of the stanchion 10.

A wedge-shaped bolt 92, which can be inserted in the seat 90, as shown in Figure 3, is disposed within the lower part of the stanchion 10.

A plate component 94, which forms a slide, is welded to the bolt 92 and guided in the cavity of the stanchion 10, being guided laterally, inter alia, by the wings of the C-shaped component 22. The slide component 94 comprises a sleeve 96 at the top. Another sleeve 98, which projects above the first, is fixed to the C-shaped component 22. A return spring 100 in the compressed state is disposed between the two sleeves 96 and 98. The spring 100 pushes the bolt 92 downwards so as to keep it inserted in the ferrule 88. The lower chain gear 58 acts as a crank and comprises a crank knob 102 which projects from the face of the gear 58 opposite that in which the seat 78 is provided.

An aperture 104, which surrounds the crank knob 102, is provided in the slide component 94 of the bolt 92. This aperture is defined by a lower edge 106 in the form of an arc of a circle whose radius is such that it does not impede the knob 102 when the latter is in the lower position, which is indicated by continuous lines at 102 (corresponding to the condition shown in Figure 1), and moves in the arc between the positions indicated by broken lines at 102a and 102b, the position 102a corresponding to the condition shown in Figure 5 and the position 102b corresponding to that which is symmetrical with respect to the centre of the stanchion 10.

The aperture 104 comprises an upper edge 108 in the form of a flattened upturned V which constitutes a cam surface formed by two ramps: when the lever 68 is pivoted so as to point upwards, the knob 102 engages the left-hand or right-hand ramp, according to the direction of rotation of the lever, converting the rotary movement of the lever 68 into an upward movement of the slide component 94 and the bolt 92. During the rising movement the bolt 92 is released from the ferrule 88, with the consequent release of the stanchion 10, which can be lowered and detached.

When the knob 102 has moved from the position 102a or 102b to reach the connecting vertex between the two ramps of the cam surface 108, as indicated at 102c, the bolt 92 is held firmly in the disengaged position against the force of the spring 100.

## Claims

1. Device for locking two adjacent folding side boards (14, 16) of an industrial vehicle body in the upright position, the lower edges of which side boards (14, 16) are hinged in a detachable manner to a side member (12) of the floor of the body, of the type comprising a folding stanchion (10) placed between the two side boards (14, 16) and whose lower end is hinged in a detachable manner to the side member (12), and in which the stanchion (10) is provided with a lower wedge-shaped bolt (92) which can be inserted downwardly in a corresponding lower ferrule (88) fixed to the side member (12) so as to hold the stanchion (10) in the upright position, which stanchion (10) comprises lateral stops (26, 28), against which the lateral edges (18, 20) of the side boards (14, 16) are engaged in the upright position, and is provided on its upper part with a locking plate (30) which has a profiled contour with two opposite lobes (40, 42) and is rotatably disposed against the external face of the stanchion (10) so that it can be manually brought into an intermediate angular position, in which the two lobes (40, 42) project from the two sides of the stanchion (10) so that the lateral edges (18, 20) of the side boards (14, 16) are locked between the lobes (40, 42) and the stops (26, 28), and into two positions which are angularly symmetrical with respect to the intermediate position and in which either of the two lobes (40, 42) projects from the respective side of the stanchion (10) so as to lock the lateral edge (18, 20) of the corresponding side board (14, 16) and leave the lateral edge (18, 20) of the opposite side board (14, 16) free, characterized in that the stanchion (10) is also provided on its lower part with a second locking plate (32) which is essentially identical to that (30) of the upper part, in that the two locking plates (30, 32) are keyed on studs (52, 54) which are kinematically connected such that these plates (30, 32) pivot while maintaining the same relative orientation, and in that the lower plate (32) is permanently provided with a manually operated handle (68) for the purpose of rotating both the lower plate (32) and the upper plate (30).

2. Device as claimed in Claim 1, characterized in that each locking plate (30, 32) has an external shape which corresponds essentially to an arc of a circle (34) and to two consecutive sides (36, 38) of an obtuse angle, and in that the lobes (40, 42) correspond to respective portions comprised by one of the sides and by the arc.

3. Device as claimed in Claim 1 or 2, characterized in that the stanchion (10) is box-shaped and that respective chain gears (56, 58) with an equal number of teeth are keyed inside the stanchion (10) to studs (52, 54) of the locking plates (30, 32) and are connected together by a chain (60), which is also inside the stanchion (10).

4. Device as claimed in any one of the preceding claims, characterized in that it also comprises a kinematic mechanism (102, 104) for converting the rotary movement of the operating handle (68) into a linear movement of the bolt (92) so as to release the latter from the ferrule (88) by rotating the handle (68) into an angular position of 180° with respect to the position corresponding to the above-mentioned intermediate position of the locking plates (30, 32).

5. Device as claimed in Claim 4, characterized in that the stanchion (10) is box-shaped, the bolt (92) is rigid with a slide component (94) which slides longitudinally inside the stanchion (10), the stanchion (10) contains a spring (100) for repelling the slide component into the position for engaging the bolt (92), and the above-mentioned kinematic mechanism comprises a crank knob (102), which is rotationally rigid with the stud (54) of the lower locking plate (32), and a corresponding cam surface (108) formed in the slide component (94) and disposed such that the engagement of the crank knob (102) with this surface causes the slide component (94) to move against the force of the return spring (100).

6. Device as claimed in Claim 5, characterized in that the slide component (94) has an aperture (104), which surrounds the crank knob (102), and the cam surface is formed by an upper edge (108), in the form of an upturned V, of the aperture (104), which edge (108) defines two ramps, either of which can be engaged by the crank knob so as to release the bolt (92), according to the direction in which the knob is rotated, and to maintain the bolt in the raised position when the crank knob is at the connecting vertex between the two ramps.

7. Device as claimed in any one of the preceding claims, characterized in that the handle (68) is formed by a lever which is pivoted, towards one of its ends, about the lower locking plate (32) about an axis which is parallel to this plate (32), which lever extends along the plate (32) and beyond the latter so as to project from the bottom of the plate (32) when the latter is in the intermediate angular position, in that the projecting end (72) of the lever comprises a projecting part (84) which faces the stanchion (10), and the stanchion (10) comprises a corresponding seat (86) for receiving the projecting part (84), and in that the lever (68) is urged by a spring (80) into a position in which the projecting part (84) fits into the seat so as to prevent the accidental rotation of the lower locking plate (32) outside of the intermediate position in which it locks the two side boards (14, 16).

**Patentansprüche**

1. Gerät zum Verriegeln von zwei benachbarten, klappbaren Bordwänden (14, 16) eines Industriefahrzeug-Aufbaus in der aufrechten Stellung, wobei die Unterkanten der Bordwände (14, 16) abnehmbar an einem Seitenteil (12) des Bodens des Aufbaus gelenkig gelagert sind, wobei das Gerät eine klappbare Strebe (10) enthält, die zwischen den beiden Bordwänden (14, 16) angeordnet ist und deren unteres Ende am Seitenteil (12) abnehmbar gelenkig gelagert ist, und wobei die Strebe (10) mit einem unteren, keilförmigen Riegel (92) versehen ist, der nach unten in ein entsprechendes unteres Eisenband (88) eingesetzt werden kann, das am Seitenteil (12) befestigt ist, um die Strebe (10) in der aufrechten Stellung zu halten, wobei die Strebe (10) seitliche Anschläge (26, 28) besitzt, in die die Seitenkanten (18, 20) der Bordwände (14, 16) in der aufrechten Stellung eingreifen, und die in ihrem oberen Teil mit einer Verriegelungsplatte (30) versehen ist, die einen profilierten Umriß mit zwei gegenüberliegenden Flügeln (40, 42) besitzt und drehbar an der Außenfläche der Strebe (10) so angeordnet ist, daß sie händisch in eine Winkelzwischenstellung gebracht werden kann, in der die beiden Flügel (40, 42) von den beiden Seiten der Strebe (10) vorspringen, so daß die Seitenkanten (18, 20) der Bordwände (14, 16) zwischen den Flügeln (40, 42) und den Anschlägen (26, 28) verriegelt werden, sowie in zwei Stellungen gebracht werden kann, in der sie winkelsymmetrisch zur Zwischenstellung liegt und in der jeder der beiden Flügel (40, 42) von der entsprechenden Seite der Strebe (10) vorspringt, um die Seitenkante (18, 20) der entsprechenden Bordwand (14, 16) zu verriegeln und die Seitenkante (18, 20) der gegenüberliegenden Bordwand (14, 16) freizugeben, dadurch gekennzeichnet, daß die Strebe (10) weiters in ihrem unteren Teil mit einer zweiten Verriegelungsplatte (32) versehen ist, die im wesentlichen gleich der Verriegelungsplatte (30) des oberen Teils ist, wobei die beiden Verriegelungsplatten (30, 32) auf Stützen (52, 54) aufgekeilt sind, die kinematisch so verbunden sind, daß sich diese Platten (30, 32) verschwenken, während sie die gleiche relative Ausrichtung beibehalten, und daß die untere Platte (32) dauernd mit einem Handgriff (68) versehen ist, um sowohl die untere Platte (32) als auch die obere Platte (30) in Drehung zu versetzen.

2. Gerät gemäß Anspruch 1, dadurch gekennzeichnet, daß jede Verriegelungsplatte (30, 32) eine äußere Form besitzt, die im wesentlichen einem Kreisbogen (34) entspricht, sowie zwei aufeinander folgende Seiten (36, 38) eines stumpfen Winkels besitzt, und daß die Flügel (40, 42) entsprechenden Teilen entsprechen, die von einer Seite und dem Bogen gebildet werden.

3. Gerät gemäß Anspruch 1 oder 2, dadurch gekennzeichnet, daß die Strebe (10) kastenförmig ausgebildet ist, und daß entsprechende Kettenräder (56, 58), die eine gleiche Anzahl von Zähnen besitzen, innerhalb der Strebe (10) auf Stützen (52, 54) der Verriegelungsplatten (30, 32) aufgekeilt und miteinander durch eine Kette (60) verbunden sind, die ebenfalls innerhalb der Strebe (10) liegt.

4. Gerät gemäß jedem der bisherigen Ansprüche, dadurch gekennzeichnet, daß das Gerät weiters eine kinematische Einrichtung (103, 104) enthält, um die Drehbewegung des Handgriffs (68) in eine Linearbewegung des Riegels (92) umzusetzen, um diesen aus dem Eisenband (88) durch das Drehen des Griffs (68) in eine Winkelstellung von 180° zu jener Stellung freizugeben, die der oben erwähnten Zwischenstellung der Verriegelungsplatten (30, 32) entspricht.

5. Gerät gemäß Anspruch 4, dadurch gekennzeichnet, daß die Strebe (10) kastenförmig ausgebildet ist, wobei der Riegel (92) mit einem Schieber (94) fest verbunden ist, der in Längsrichtung in der Strebe (10) gleitet, wobei die Strebe (10) eine Feder (100) enthält, um den Schieber in die Stellung zurückzustoßen, um in den Riegel (92) einzugreifen, und wobei die oben erwähnte kinematische Einrichtung einen Kurbelknopf (102) enthält, der mit der Stütze (54) der unteren Verriegelungsplatte (32) starr drehbar ist, sowie eine entsprechende Nockenfläche (108) enthält, die im Schieber (94) ausgebildet und so angeordnet ist, daß der Eingriff des Kurbelknopfs (102) in diese Fläche eine Bewegung des Schiebers (94) gegen die Kraft der Rückholfeder (100) hervorruft.

6. Gerät gemäß Anspruch 5, dadurch gekennzeichnet, daß der Schieber (94) eine Öffnung (104) besitzt, die den Kurbelknopf (102) umgibt, wobei die Nockenfläche von einer Oberkante (108) in Form eines auf dem Kopf stehenden V der Öffnung (104) gebildet wird, wobei die Kante (108) zwei Schrägen bildet, von denen eine mit dem Kurbelknopf in Eingriff treten kann, um den Riegel (92) in Übereinstimmung mit der Drehrichtung des Knopfs freizugeben, und um den Riegel in der angegebenen Stellung zu halten, wenn der Kurbelknopf sich am Scheitelpunkt zwischen den beiden Schrägen befindet.

7. Gerät gemäß jedem der bisherigen Ansprüche, dadurch gekennzeichnet, daß der Griff (68) von einem Hebel gebildet wird, der an einem Ende um die untere Verriegelungsplatte (32) um eine Achse verschwenkt werden kann, die parallel zu dieser Platte (32) liegt, wobei der Hebel längs der Platte (32) und über diese hinaus verläuft, um vom Boden der Platte (32) vorzuspringen, wenn sich diese in der Winkelzwischenstellung befindet, wobei das vorspringende Ende (72) des Hebels einen Vorsprung (84) enthält, der der Strebe (10) gegenüberliegt, wobei die Strebe (10) einen entsprechenden Sitz (86) enthält, um den Vorsprung (84) aufzunehmen, und daß der Hebel (68) von einer Feder (80) in eine Stellung gedrückt wird, in der der Vorsprung (84) in den Sitz paßt, um eine unbeabsichtigte Drehung der unteren Verriegelungsplatte (32) aus der Zwischenstellung zu verhindern, in der sie die beiden Bordwände (14, 16) verriegelt.

**Revendications**

1. Dispositif pour verrouiller en position verticale deux ridelles latérales rabattables (14, 16) d'une carrosserie de véhicule industriel, les bords inférieurs de ces ridelles latérales (14, 16) étant articulés par charnière, de façon amovible, à un élément latéral (12) du plancher de la carrosserie, du type comportant un montant rabattable (10) placé entre les deux ridelles latérales (14, 16) et dont l'extrémité inférieure est articulée par charnière, de façon amovible, à l'élément latéral (12), et dans lequel le montant (10) est muni d'un pène inférieur en forme de coin (92) que l'on peut introduire, vers le bas, dans une gâche inférieure correspondante (88) fixée à l'élément latéral (12), de façon à maintenir le montant (10) dans la position verticale; lequel montant (10) comporte des butées latérales (26, 28) contre lesquelles les bords latéraux (18, 20) des ridelles latérales (14, 16) viennent en prise en position verticale, et comporte aussi, à sa partie supérieure, une plaque de verrouillage (30) qui présente un contour profilé avec deux lobes opposés (40, 42) et qui est disposée, avec possibilité de rotation, contre la face extérieure du montant (10) de façon à pouvoir être amenée manuellement dans une position angulaire intermédiaire dans laquelle les deux lobes (40, 42) débordent des deux côtés du montant (10) de façon que les bords latéraux (18, 20) des ridelles latérales (14, 16) soient verrouillés entre les lobes (40, 42) et les butées (26, 28), et dans deux positions qui sont angulairement symétriques par rapport à la position intermédiaire et dans lesquelles l'un ou l'autre des deux lobes (40, 42) déborde du côté respectif du montant (10) de façon à verrouiller le bord latéral (18, 20) de la ridelle latérale correspondante (14, 16) et à libérer le bord latéral (18, 20) de la ridelle latérale opposée (14, 16), caractérisé en ce que le montant (10) comporte également à sa partie inférieure une seconde plaque de verrouillage (32) qui est essentiellement identique à celle (30) de la partie supérieure; en ce que les deux plaques de verrouillage (30, 32) sont clavetées sur des tourillons (52, 54) qui sont cinématiquement connectés de façon que ces plaques (30, 32) pivotent tout en conservant la même orientation relative; et en ce que la plaque inférieure (32) comporte en permanence une poignée (68), manœuvrée manuellement, pour permettre de faire tourner à la fois la plaque inférieure (32) et la plaque supérieure (30).

2. Dispositif selon la revendication 1, caractérisé en ce que chaque plaque de verrouillage (30, 32) a une forme extérieure qui correspond essentiellement à un arc de cercle (34) et aux deux côtés consécutifs (36, 38) d'un angle obtus; et en ce que les lobes (40, 42) correspondent aux portions respectives constituées par l'un des côtés et par l'arc.

3. Dispositif selon la revendication 1 ou 2, caractérisé en ce que le montant (10) est en forme de caisson; et en ce que des roues à chaîne respectives (56, 58), présentant un nombre égal de dents, sont clavetées, à l'intérieur du montant (10), aux tourillons (52, 54) des plaques de verrouillage (30, 32) et sont reliées ensemble par une chaîne (60) qui se trouve également à l'intérieur du montant (10).

4. Dispositif selon l'une quelconque des revendications précédentes, caractérisé en ce qu'il comporte également un mécanisme cinématique (102, 104) pour convertir le mouvement circulaire de la poignée de manœuvre (68) en un mouvement linéaire du pène (92) de façon à dégager ce dernier hors de la gâche (88) en faisant tourner la poignée (68), dans une position angulaire de 180° par rapport à la position correspondant à la position intermédiaire, mentionnée ci-dessus, des plaques de verrouillage (30, 32).

5. Dispositif selon la revendication 4, caractérisé en ce que le montant (10) est en forme de caisson; en ce que le pène (92) est rigide, avec un composant coulissant (94) qui coulisse longitudinalement à l'intérieur du montant (10); en ce que le montant (10) contient un ressort (100) pour rappeler le composant coulissant dans la position pour laquelle le pène (92) vient en prise; et en ce que le mécanisme cinématique mentionné ci-dessus comporte un maneton (102) qui est solidarisé en rotation avec le tourillon (54) de la plaque de verrouillage inférieure (32), ainsi qu'une surface de came correspondante (108) formée dans le composant coulissant (94) et disposée de façon que la venue en prise du maneton (102) avec la surface provoque le déplacement du composant coulissant (94) à l'encontre de la force du ressort de rappel (100).

6. Dispositif selon la revendication 5, caractérisé en ce que le composant coulissant (94) présente une ouverture (104) qui entoure le maneton (102); et en ce que la surface de came est formée par un bord supérieur (108), en forme de V renversé, de l'ouverture (104), lequel bord (108) définit deux rampes, le maneton pouvant venir en prise avec l'une ou l'autre des rampes de façon à dégager le pène (92), selon la direction dans laquelle on fait tourner le maneton, et maintenir le pène en position relevée lorsque le maneton se trouve au sommet de connexion entre les deux rampes.

7. Dispositif selon l'une quelconque des revendications précédentes, caractérisé en ce que la poignée (68) est formée par un levier qui est monté pivotant, aux environs de celle de ses extrémités qui est dans la région de la plaque de verrouillage inférieure (32), autour d'un axe parallèle à cette plaque (32), lequel levier s'étend le long de la plaque (32) et au-delà de cette dernière de façon à faire saillir hors de la partie inférieure de la plaque (32) lorsque cette dernière se trouve dans la position angulaire intermédiaire; en ce que l'extrémité en saillie (72) du levier comporte une partie en saillie (84) qui fait face au montant (10); et en ce que le montant (10) comporte une niche correspondante (86) pour recevoir la partie en saillie (84); et en ce que le levier (68) est poussé, par un ressort (80), dans une position dans laquelle la partie en saillie (84) se loge dans la niche de façon à empêcher la rotation accidentelle de la plaque de verrouillage inférieure (32) en dehors de la position intermédiaire dans laquelle elle verrouille les deux ridelles latérales (14, 16).

FIG. 1

FIG. 2

# FIG. 4

FIG. 5

FIG. 6

98
100
96
94
102c
108
102a
102
102b
104
106
92

FIG. 3

48
56
30
52
60
VI
98
22
24
100
96
50
94
58
32
80
76
66
70
54
102
92
68
12
90
72
88
68a
VI